# EUROPÄISCHE PATENTSCHRIFT

(11) **EP 1 310 459 B1**
(45) Veröffentlichungstag und Bekanntmachung des Hinweises auf die Patenterteilung: **28.09.2005**
(21) Anmeldenummer: 02024537.9
(22) Anmeldetag: 31.10.2002
(51) Int. Cl.: C01G 47/00, C22B 3/00

(54) **Verfahren zur Gewinnung von Rhenium**
Process for recovering Rhenium
Procédé d'obtention de rhenium

(30) Priorität: 09.11.2001 DE 10155237
(43) Veröffentlichungstag der Anmeldung: 14.05.2003
(73) Patentinhaber: H.C. Starck GmbH, 38642 Goslar (DE)
(72) Erfinder: Meese-Marktscheffel, Juliane, Dr., 38642 Goslar (DE); Stoller, Viktor, 38667 Bad Harzburg (DE); Olbrich, Armin Dr., 38723 Seesen (DE); Mathy, Wolfgang,, 38685 Langelsheim (DE); Erb, Michael, 38259 Salzgitter (DE)
(74) Vertreter: Feldhues, Michael L.F.

(56) Entgegenhaltungen:
- DD-A- 155 825
- US-A- 2 945 743
- US-A- 3 244 475
- US-A- 3 672 874

## Beschreibung

Die vorliegende Erfindung betrifft ein Verfahren zur Gewinnung von Rhenium durch Adsorbtion an stark basischen Ionenaustauschern, insbesondere ein Verfahren zur Elution von an stark basischen Anionaustauschern adsorbiertem Rhenium.

Vom seltenen Element Rhenium sind bisher keine eigenen Mineralien bekannt. Vielmehr kommt es als Begleitelement in Molybdänglanz (=Molybdänit) oder auch in Spuren in Columbit, Gadolinit und einigen Mangan-, Platin- und Uranerzen vor. Die größte Re-Menge wird durch Aufarbeitung der Röstgase aus der Molybdän- und Kupferproduktion gewonnen, möglich ist aber auch das Re-Recycling aus rhenium-haltigen Sekundärrohstoffen wie z.B. gebrauchten Katalysatoren.

In der Regel fallen letztendlich mehr oder weniger stark mit anderen Elementen verunreinigte rheniumhaltige Lösungen an, die anschließend via Ionenaustausch, Extraktion, Fällungskristallisation oder Elektrolyse angereichert und aufgearbeitet werden.

Als Ionenaustauscher wird in US-A 2,876,065 und US-A 3,672,874 die Verwendung stark basischer Anionenaustauscher empfohlen, ebenso wie in der US-A 3,733,388. Die zuerst erwähnte US-A 2,876,065 lehrt, dass nach einer ersten Vorreinigungsstufe die noch Mo und andere Verunreinigungen (wie As und Se) enthaltende Re-Lösung mit einem stark basischen Anionenaustauscher kontaktiert wird, wobei neben Re auch Mo und beispielsweise auch As und Se aufgenommen werden. Das Molybdän inklusive der Verunreinigungen werden daher zunächst alkalisch freigesetzt, und erst nach einem Spülschritt wird dann das auf dem Tauscher verbliebene Rhenium mittels verdünnter Lösungen starker Mineralsäuren eluiert, wobei von den genannten (HCl, H₂SO₄, HNO₃ und HClO₄) die Perchlorsäure als am wirksamsten dargestellt wird. Von Nachteil sind dabei jedoch, dass das eluierte Re-Produkt, die Perrheniumsäure, im Gemisch mit Perchlorsäure anfällt und weitere aufwendige Trennvorgänge nötig sind, dass der Einsatz von Perchlorsäure hohe Anforderungen an Sicherheitsstandards und an Materialeigenschaften der verwendeten Apparaturen bedingt, aber vor allem auch, dass das Perchlorat selbst beim Elutionsschritt nahezu irreveresibel an den Anionenaustauscher gebunden wird: d.h. der Tauscher kann nicht mit voller Kapazität wieder verwendet werden (Substitution nach wenigen Sorptions-Elutionzyklen)! Auch in US-A 2,945,743 und SU-PS 163 359 ist die Verwendung starker Mineralsäuren als Elutionsmittel vorgeschlagen.

In der SU-PS 193 724 wird eine Hydrazin-Lösung (8 %ig) als Elutionsmittel beschrieben, um die Regenerierbarkeit des anionischen Tauschers zu verbessern, allerdings muss das desorbierte Perrhenat einem zusätzlichen, extraktiven Reinigungsschritt (Behandlung mit Tributylphosphat) unterzogen werden. Gleichzeitig gestaltet sich die technische Handhabung von Hydrazin relativ aufwendig.

Andere Patentschriften, wie die US-A 3,558,268 und die DE-A 1 808 707, nutzen eine wässrige Thiocyanat-Lösung als Elutionsmittel: abgesehen von der schon aus Umweltgesichtspunkten problematischen Verwendung von Thiocyanat selbst, ist insbesondere nachteilig, dass nur Thiocyanate mit merklicher Wasserlöslichkeit genutzt werden können und ihre Löslichkeit in Wasser größer als die der entsprechenden Perrhenate sein muss (bei Anwesenheit beider Salze in Lösung).

Ein günstiges Perrhenat-Elektrolyt-Vehältnis wird von der DD 260 227 A1 dadurch erzielt, dass als Elutionsmittel Gemische aus einem salpeter- oder salzsauren Elektrolyten und einem mit wässrigen Lösungen mischbaren organischen Lösemittel, wie Verbindungen aus der Gruppe der Ketone oder der Alkohole, eingesetzt werden. Die Verwendung organischer Reagentien (Handhabung/Gefährdungspotential/Entsorgung/etc.) stellt bei dieser Variante ebenso einen Nachteil dar wie der geringe Ausbringungsgrad an Rhenium.

US 3244475 A offenbart ein Verfahren zur Gewinnung von Rheniumverbindungen aus Rheniumhaltigen Lösungen, wobei die rheniumhaltige Rohlösung zunächst oxidiert wird um die gelösten Molyodänverbindungen in Mo⁶⁺-Verbindungen und die Rheniumverbindungen in Re⁷⁺-Verbindungen (Perrhenate) zu überführen, diese anschließend mit einem flüssigen Ionenaustauscher umgesetzt und das Rhenium aus der organischen Phase mittels verdünnter Perchlorsäure eluiert wird und von dem sich das Verfahren gemäß der Erfindung dadurch unterscheidet, daß im Elutionsschritt das Ionenaustauscherharz mit einer wäßrigen, ein Oxidationsmittel enthaltenden Lösung behandelt wird.

Eine Reihe von Veröffentlichungen konzentrieren sich auf die Re-Elution unter Nutzung von Halogenwasserstoffsäuren, bevorzugt wässrigen Chlorwasserstoffsäuren. Beispielhaft seien hier nur die DE 28 36 641 A1, die DE 28 36 632 A1 und DD 155 825 genannt. Alle drei Veröffentlichungen nutzen als Grundoperation zur Re-Elution von stark basischen Anionenaustauschern bevorzugt 4 bis 8 M Chlorwasserstoffsäure bei erhöhten Temperaturen (50 - 100°C), zeigen aber vergleichsweise hohe Re-Restgehalte an den Tauschermaterialien, dadurch niedrige Re-Ausbringungsgrade und weisen - bedingt durch die erhöhten Betriebstemperaturen - auch niedrige Tauscherstandzeiten auf. In der DD 155 825 wird die mit den eben benannten Nachteilen verknüpfte reine Salzsäure-Elution mit einer Kreislaufführung der Salzsäure und damit kombinierten Perrhenat-Kristallisation im Sumpf beschrieben.

Aufgabe der vorliegenden Erfindung ist es, ein Verfahren zur Verfügung zu stellen, das die Nachteile der bekannten Verfahren vermeidet. Insbesondere ist es Aufgabe der vorliegenden Erfindung, die Standzeit von Ionenaustauschern, d.h. die Zyklenzahl für die Wiederbeladung von Ionenaustauschern zu erhöhen. Ferner ist es Aufgabe der vorliegenden Erfindung, den Elutionsgrad und damit die Belade-/Entlade-Kapazität von Ionenaustauschern zu erhöhen.

Die Erfindung geht aus von dem an sich bekannten Verfahren, Rhenium-haltige Lösungen mittels stark basischer Anionenaustauscherharze zu behandeln, dabei das Rhenium an dem Austauscherharz zu adsorbieren, das adsorbierte Rhenium mittels konzentrierter anorganischer wässriger Säuren zu eluieren und aus dem Eluat das Rhenium in wiedereinsetzbarer Form durch geeignete Aufarbeitung zu gewinnen.

Gegenstand der vorliegenden Erfindung ist ein Verfahren zur Elution von an stark basischen Ionenaustauscherharzen adsorbiertem Rhenium mittels wässriger hochkonzentrierter Salzsäure, das dadurch gekennzeichnet ist, dass das Ionenaustauscherharz mit einer wässrigen, ein Oxidationsmittel enthaltenden Lösung behandelt wird.

Als Oxidationsmittel ist insbesondere Wasserstoffperoxid geeignet. Vorzugsweise wird eine wässrige Wasserstoffperoxidlösung, die 0,05 bis 4 %, insbesondere bevorzugt 2 bis 3,5 % Wasserstoffperoxid enthält, eingesetzt.

Als Oxidationsmittel ist ferner Peroxidisulfat geeignet.

Die Salzsäurelösung kann eine Konzentration von 8 bis 12 Mol/l, vorzugsweise 9 bis 10 Mol/l Chlorwasserstoff aufweisen.

Durch die Behandlung mit dem Oxidationsmittel wird sichergestellt, dass Rhenium vollständig in der siebenwertigen Form vorliegt.

Nach einer Ausführungsform der Erfindung wird das Oxidationsmittel der hochkonzentrierten Salzsäurelösung zugegeben, vorzugsweise in einer Konzentration von 0,05 bis 0,25 Gew.-% Wasserstoffperoxid.

Nach einer zweiten Ausführungsform der Erfindung wird der beladene Ionenaustauscher vor der Kontaktierung mit dem Elutionsmittel mit Oxidationsmittellösung behandelt. Bevorzugt wird in diesem Fall eine Oxidationsmittellösung, die 0,5 bis 4 Gew.-% Wasserstoffperoxid enthält, eingesetzt.

Nach einer dritten Ausführungsform der Erfindung wird die Elution mehrstufig durchgeführt und der noch partiell beladene Ionenaustauscher zumindest vor der letzten Elutionsstufe mit Oxidationsmittellösung behandelt. Bevorzugt wird in diesem Fall eine 0,5 bis 2 gew.-%ige Wasserstoffperoxidlösung eingesetzt.

Auf diese Weise gelingt es, auch ohne Anwendung von das Ionenaustauscherharz belastenden erhöhten Temperaturen sehr niedrige Re-Restgehalte am Ionenaustauscher zu erzielen.

Nach einer bevorzugten Ausführungsform der Erfindung wird der Ionenaustauscher sowohl mit Oxidationsmittel vorbehandelt, als auch der zur Elution eingesetzten hochkonzentrierten Salzsäure ein Oxidationsmittel zugesetzt. Hierdurch wird eine weitere Verringerung des Re-Restgehaltes am Ionenaustauscher erreicht.

Nach einer weiter bevorzugten Ausführungsform der Erfindung wird die Elution in mindestens zwei Stufen mit Oxidationsmittel-haltiger Salzsäure durchgeführt, wobei zwischen den Elutionsstufen eine Zwischenbehandlung des noch partiell beladenen Austauscherharzes mit wässriger Oxidationsmittellösung durchgeführt wird. Es hat sich gezeigt, dass auf diese Weise Elutionsgrade von über 99 % erzielt werden können. Eine mehr als zweistufige Elution ist im allgemeinen nicht erforderlich. Durch zusätzliche Vorbehandlung vor der ersten Elutionsstufe kann der Elutionsgrad weiter gesteigert werden.

Es hat sich gezeigt, dass aufgrund des erfindungsgemäßen Elutionsverfahrens auch bei vielfach wiederholter Beladung des Ionenaustauscherharzes die Beladungskapazität nicht beeinträchtigt wird.

In einem industriellen Ionenaustauschverfahren sind für die verschiedenen Prozessstufen jeweils eine oder mehrere Ionenaustauschersäulen vorgesehen, die zyklisch nacheinander die verschiedenen Prozessstufen durchlaufen. Dabei werden mindestens zwei Ionenaustauschersäulen in der Prozessstufe der Elution betrieben, weil die beiden Säulen von dem Elutionsmittel nacheinander durchströmt werden, wobei nach vollständiger Elution der ersten vom Elutionsmittel durchströmten Anionenaustauschersäule die zweite Ionenaustauschersäule als erste Elutionsstufe geschaltet wird und eine letzte Stufe mit beladenem Ionenaustauscher hinzugeschaltet wird. Erfindungsgemäß erfolgt vor der Umschaltung jeweils eine Behandlung mit Oxidationsmittellösung, wobei bevorzugt das Elutionsmittel ein Oxidationsmittel enthält.

Im Allgemeinen ist es ausreichend, die Elution zweistufig, d.h. durch zwei in Reihe geschaltete Ionenaustauschersäulen durchzuführen.

Das Eluat wird vorzugsweise durch Destillation aufkonzentriert, wobei sich Rhenium im Destillationssumpf anreichert. Die abdestillierte Chlorwasserstoffsäure wird vorzugsweise kondensiert und als Elutionsmittel zurückgewonnen.

### Beispiel 1

Eine Labor-Ionenaustauschersäule mit einem Innendurchmesser von 32 mm, die 300 ml eines stark basischen Anionenaustauscherharzes enthält, wird mit Rhenium aus Waschlaugen aus der Molybdänsulfid-Röstung beladen. Das Harz enthält 9,81 Gew.-% Rhenium, berechnet auf das trockene Austauscherharz. Die Säule wird mit einem Liter 3 %iger Wasserstoffperoxid-Lösung behandelt. Anschließend wird mit 2 Litern 9 molarer Salzsäurelösung mit einer Geschwindigkeit von 200 ml/h eluiert. Das Ionenaustauscherharz enthält nach der Elution, Nachwaschen mit VE-Wasser und Trocknen noch 0,29 Gew.-% Rhenium, entsprechend einem Elutionsgrad von 97,3 %.

### Beispiel 2

Beispiel 1 wird wiederholt mit der Abweichung, dass eine 9 molare Salzsäure mit 0,12 Gew.-% Wasserstoffperoxid als Elutionsmittel eingesetzt wird. Es wird ein Elutionsgrad von 98,4 % erzielt.

### Beispiel 3

Beispiel 1 wird wiederholt, jedoch ohne Vorbehandlung des Austauscherharzes mit Wasserstoffperoxidlösung. Die 9 molare Salzsäurelösung enthält 0,1 Gew.-% H₂O₂. Es wird ein Elutionsgrad von 97,2 % erzielt.

### Beispiel 4

Beispiel 3 wird wiederholt, mit der Abweichung, dass die Elution nach der halben Zeit unterbrochen wird und das Harz mit 0,5 Litern 1,5 gew.-%iger Wasserstoffperoxidlösung behandelt und danach die Elution fortgesetzt wird. Es wird ein Elutionsgrad von 99,1 % erzielt.

### Beispiel 5

Beispiel 4 wird wiederholt, jedoch mit der Vorbehandlung wie in Beispiel 1. Es wird ein Elutionsgrad von 99,5 % erzielt.

### Beispiel 6

Beispiel 5 wird wiederholt, mit der Abweichung, das der Ionenaustauscher mit Rhenium-haltigen Waschlösungen aus der industriellen Kupferproduktion beladen wird. Der Ionenaustauscher weist einen Rheniumgehalt von 25,07 Gew.-%, bezogen auf das trockene Harz auf. Es wird ein Elutionsgrad von 99,8 % erzielt.

### Beispiel 7

Beispiel 5 wird wiederholt, mit der Abweichung, dass der Ionenaustauscher mit Wolfram- und Rhenium-haltigen stark basischen Laugen aus dem Schrott-Recycling beladen wird. Der Ionenaustauscher enthält 35,53 Gew.-% Rhenium, bezogen auf das trockene Harz. Es wird ein Elutionsgrad von 99,9 % erzielt.

## Patentansprüche

1. Verfahren zur Elution von an stark basischen Ionenaustauscherharzen adsorbiertem Rhenium mittels hochkonzentrierter wässriger Salzsäurelösung, **dadurch gekennzeichnet, dass** das Ionenaustauscherharz mit einer wässrigen, ein Oxidationsmittel enthaltenden Lösung behandelt wird.

2. Verfahren nach Anspruch 1, **dadurch gekennzeichnet, dass** als Oxidationsmittel Wasserstoffperoxid eingesetzt wird.

3. Verfahren nach Anspruch 2, **dadurch gekennzeichnet, dass** eine 0,05 bis 4 %ige Wasserstoffperoxidlösung eingesetzt wird.

4. Verfahren nach einem der Ansprüche 1 bis 3, **dadurch gekennzeichnet, dass** mit 8 bis 12 molarer Salzsäurelösung eluiert wird.

5. Verfahren nach einem der Ansprüche 1 bis 4, **dadurch gekennzeichnet, dass** das Oxidationsmittel der Salzsäurelösung zugegeben wird.

6. Verfahren nach einem der Ansprüche 1 bis 5, **dadurch gekennzeichnet, dass** das beladene Ionenaustauscherharz mit einer wässrigen Oxidationsmittellösung vor der Elution vorbehandelt wird.

7. Verfahren nach einem der Ansprüche 1 bis 6, **dadurch gekennzeichnet, dass** die Elution mehrstufig durchgeführt wird und zumindest vor der letzten Stufe eine Zwischenbehandlung des Ionenaustauscherharzes mit Oxidationsmittellösung durchgeführt wird.

8. Verfahren nach Anspruch 5, **dadurch gekennzeichnet, dass** die Salzsäurelösung 0,05 bis 0,25 Gew.-% Wasserstoffperoxid gelöst enthält.

9. Verfahren nach einem der Ansprüche 1 bis 8, **dadurch gekennzeichnet, dass** die Oxidationsmittellösung für die Vor- und/oder Zwischenbehandlung 0,5 bis 3,5 Gew.-% Wasserstoffperoxid enthält.

10. Verfahren nach einem der Ansprüche 1 bis 9, **dadurch gekennzeichnet, dass** das Eluat durch Destillation eingeengt, der abdestillierte Chlorwasserstoff kondensiert und als Elutionsmittel zurückgewonnen, das Rhenium im Destillationssumpf gesammelt und in an sich bekannter Weise aufgearbeitet wird.

## Claims

1. Process for the elution of rhenium adsorbed on strongly basic ion exchange resins by means of highly concentrated aqueous hydrochloric acid solution, **characterized in that** the ion exchange resin is treated with an aqueous solution containing an oxidizing agent.

2. Process according to Claim 1, **characterized in that** the oxidizing agent used is hydrogen peroxide.

3. Process according to Claim 2, **characterized in that** a 0.05 to 4% hydrogen peroxide solution is used.

4. Process according to one of Claims 1 to 3, **characterized in that** the elution is performed with 8 to 12 molar hydrochloric acid solution.

5. Process according to one of Claims 1 to 4, **characterized in that** the oxidizing agent is added to the hydrochloric acid solution.

6. Process according to one of Claims 1 to 5, **characterized in that** the laden ion exchange resin is pretreated with an aqueous oxidizing agent solution prior to the elution.

7. Process according to one of Claims 1 to 6, **characterized in that** the elution is performed in several stages and an intermediate treatment of the ion exchange resin with oxidizing agent solution is carried out at least before the last stage.

8. Process according to Claim 5, **characterized in that** the hydrochloric acid solution contains 0.05 to 0.25 wt.% of hydrogen peroxide dissolved in it.

9. Process according to one of Claims 1 to 8, **characterized in that** the oxidizing agent solution for the pretreatment and/or intermediate treatment contains 0.5 to 3.5 wt.% of hydrogen peroxide.

10. Process according to one of Claims 1 to 9, **characterized in that** the eluate is concentrated by distillation, the hydrogen chloride distilled off is condensed and recovered as eluent, and the rhenium in the bottom distillation product is collected and worked up in a manner known per se.

## Revendications

1. Procédé d'élution de rhénium adsorbé sur des résines d'échange ionique fortement basiques au moyen d'une solution aqueuse d'acide chlorhydrique très concentrée, **caractérisé en ce que** la résine d'échange ionique est traitée avec une solution aqueuse contenant un agent oxydant.

2. Procédé suivant la revendication 1, **caractérisé en ce qu'**on utilise le peroxyde d'hydrogène comme agent oxydant.

3. Procédé suivant la revendication 2, **caractérisé en ce qu'**on utilise une solution de peroxyde d'hydrogène allant de 0,05 à 4 %.

4. Procédé suivant l'une des revendications 1 à 3, **caractérisé en ce que** l'élution est effectuée avec une solution d'acide chlorhydrique de molarité allant de 8 à 12.

5. Procédé suivant l'une des revendications 1 à 4, **caractérisé en ce que** l'agent oxydant est ajouté à la solution d'acide chlorhydrique.

6. Procédé suivant l'une des revendications 1 à 5, **caractérisé en ce que** la résine d'échange ionique chargée est traitée avec une solution aqueuse d'agent oxydant préalablement à l'élution.

7. Procédé suivant l'une des revendications 1 à 6, **caractérisé en ce que** l'élution est conduite en plusieurs étapes et un traitement intermédiaire de la résine d'échange ionique avec la solution d'agent oxydant est effectué au moins avant la dernière étape.

8. Procédé suivant la revendication 5, **caractérisé en ce que** la solution d'acide chlorhydrique contient 0,05 à 0,25 % en poids de peroxyde d'hydrogène.

9. Procédé suivant l'une des revendications 1 à 8, **caractérisé en ce que** la solution d'agent oxydant pour le prétraitement et/ou le traitement intermédiaire contient 0,5 à 3,5 % en poids de peroxyde d'hydrogène.

10. Procédé suivant l'une des revendications 1 à 9, **caractérisé en ce que** l'éluat est concentré par distillation, le chlorure d'hydrogène chassé par distillation est condensé et récupéré comme agent d'élution, le rhénium présent dans le résidu de distillation est recueilli et il est finalement traité d'une manière connue.
